Europäisches Patentamt

European Patent Office

Office européen des brevets

(19)

(11) Publication number: **0 077 168**
**B1**

(12) **EUROPEAN PATENT SPECIFICATION**

(45) Date of publication of patent specification: **26.03.86**

(51) Int. Cl.⁴: **B 29 D 11/00, B 32 B 17/10**

(21) Application number: **82305289.9**

(22) Date of filing: **05.10.82**

(54) Method for making laminated ophthalmic lenses.

(30) Priority: **05.10.81 FR 8118678**

(43) Date of publication of application:
**20.04.83 Bulletin 83/16**

(45) Publication of the grant of the patent:
**26.03.86 Bulletin 86/13**

(84) Designated Contracting States:
**BE DE GB IT NL**

(56) References cited:
**EP-A-0 026 140**
**DE-A-2 228 299**
**DE-A-2 423 191**
**DE-A-2 424 085**
**FR-A-2 120 070**
**FR-A-2 407 898**
**GB-A-1 576 394**
**US-A-4 112 171**

(73) Proprietor: **Corning Glass Works**
**Houghton Park**
**Corning New York 14831 (US)**

(72) Inventor: **Bognar, Lewis Lee**
**412 Beartown Road**
**Painted Post New York (US)**
Inventor: **Goepfert, Serge**
**2 rues des Hautes**
**Buternes Samoreau (FR)**
Inventor: **Roger, Francoise**
**49 bis rue du Souvenir**
**Avon (FR)**
Inventor: **Vachet, Andre**
**3 rue des Genevriers La Genevraye**
**F-77690 Montigny sur Loing (FR)**

(74) Representative: **Boon, Graham Anthony et al**
**Elkington and Fife High Holborn House 52/54**
**High Holborn**
**London, WC1V 6SH (GB)**

Courier Press, Leamington Spa, England.

## Description

This invention relates to a method of making laminated ophthalmic lenses.

For more than 50 years, research in the manufacture of laminated glass structures for use as safety glass has been relatively continuous. In general, the previous safety glass structure has comprised two sheets or layers of glass bonded together through a plastic interlayer material, customarily a plastic sheet, which is optically transparent and flexible. This latter property of the interlayer is important to inhibit the fragmentation of the glass and to minimize the dispersion of particles thereof when the glass structure is subjected to an impact of sufficient force to cause breakage. Laminated safety glasses have been used for such diverse applications as eyeglasses, instrument lenses, vehicle windows, and building windows.

Nevertheless, the use of the conventional, trilayer safety glass structure consisting of two glass sheets bonded together through an organic plastic interlayer has been subject to a particular problem, which is that when subjected to an impact sufficient to fracture the structure, sharp glass fragments may be projected rearwardly. This problem has been especially acute in the fields of vehicle windshields and eyeglasses where the sharp pieces of broken glass have sometimes induced severe lacerations and loss of sight.

The use of a bilayer laminated structure, i.e. an outer sheet or ply of glass and an inner ply of an organic plastic material, has been suggested to provide an answer to this problem. In such a configuration, the plastic is designed to hold the glass fragments resulting from the breakage. However, because the inner plastic ply is exposed to the ambient environment, it must demonstrate good resistance to chemical agents and the effects of radiation so as to maintain the required mechanical and optical properties.

The most widely-used plastic interlayer material utilized in the trilayer safety glass structures, viz, polyvinyl butyral, cannot be employed in applications where it will be exposed to moisture. Nevertheless, numerous organic plastics have been prepared which are relatively unaffected by the ambient atmosphere. Such materials include cellulose acetate, cellulose triacetate, cellulose acetate butyrate, cellulose propionate, polyvinyl chloride, copolymers of vinylidene chloride, e.g. vinyl chloride, polycarbonates, polyphenylene ethers, and nylons, polyethylene terephthalate (MYLAR — Registered Trade Mark), and certain urethane polymers.

For example, United States Patent No. 4,103,070 describes bilayer laminated glass structures wherein the outer layer comprises a glass ply and the inner lamina is a polycarbonate urethane which is the reaction product of:

(1) an organic diisocyanate;

(2) an organic compound having two isocyanate-reactive hydrogens and a molecular weight less than 250; and

(3) a polycarbonate diol prepared from a mixture of linear aliphatic and cycloaliphatic diols wherein the aliphatic diol has at least four carbon atoms comprising (a) at least 30 mole percent linear aliphatic diol and (b) at least 10 mole percent cycloaliphatic diol.

In forming a bilayer structure, the urethane polymer used in the above patent is cast as a 30—35 mil (approximately 750—900 microns) film and the film is assembled between two glass sheets, one of which is coated with a release agent on the surface in contact with the film. The assembly is placed into a plastic bag which after being introduced into an oven, is evacuated to about 26—28 inches of mercury (130—165 millibars absolute pressure), and the oven heated to 215°—300°F (approximately 100°—150°C). The vacuum and heat are continued for a sufficient length of time to remove all the air between the plies of glass, the plastic interlayer material, and the release material. Thereafter, the assembly is transferred to an oil autoclave or other suitable high pressure equipment and exposed to a temperature of about 250°—300°F (approximately 120°—190°C) and a pressure between about 50—500 psi (approximately 3.5—35 bars) for a sufficient length of time to laminate the structure. The temperature of the autoclave is then reduced, the pressure released, the assembly withdrawn from the autoclave, and the glass ply coated with the release agent stripped away from the assembly, thereby leaving a glass-polycarbonate urethane bilayer laminate. No reference is made to a three-ply laminate composed of an outer glass layer and two organic plastic inner laminae.

United States Patent No. 3,867,235 is directed to the production of trilayer laminated glass structures consisting of an outer glass ply weakly bonded to a tough, flexible, optically transparent, organic plastic lamina. A weak bond between the glass and the tough, flexible plastic layer is required to effect partial delamination of the flexible layer from the glass when the latter is subjected to an impact of sufficient force to cause breakage thereof. The strength of the bond is measured in accordance with ASTM D903—49, "Peel or Stripping Strength of Adhesive Bonds". The preferred strengths are stated to range about 0.1—0.5 lbs/linear inch (0.18—0.9 N/cm).

The preferred intermediate bonding materials are cited as polyvinyl acetate, polyvinyl butyrate, and polystyrene. Although not explicitly stating this to be a required characteristic, the preferred bonding materials will exhibit thermoplasticity.

The term polyurethane is mentioned only once and that in a working example where a layer of "polyurethane" is bonded directly to a surface of a glass lens. The resulting structure was deemed unsatisfactory for the desired application. The polymer employed was not identified as being thermoplastic or thermosetting.

British Patent No. 1,576,394 discloses the production of a composite, two-layer, preformed polymeric sheet for use in fabricating glass-plastic laminates, the sheet consisting of one ply of a thermoplastic polyurethane having adhesive properties and another ply of a thermosetting polyurethane. The thermoplastic material is optically transparent and essentially non-tacky at room temperature, but will strongly adhere to glass at temperatures of 40°C and higher. The thickness of the thermoplastic film is stated to range between about 0.01—0.8 mm and is formed from an aliphatic diisocyanate and a diol of an aliphatic diacid polyester or a diol of a polyglycol ether, each of said diols having a molecular weight between 500—4000. The thermosetting layer is optically transparent, is stated to have a thickness ranging between about 0.2—0.8 mm, and is the reaction product of:

(a) a polyglycol ether resulting from the condensation of 1,2-propylene oxide with 2,2 bis(hydroxymethyl) 1-butanol and containing 10.5—12% by weight free hydroxyls; with

(b) a biuret 1,6-hexamethylene diisocyanate having 21—22% by weight of isocyanate groups, the weight of said biuret being between 0.9—1.1 times the weight of said polyglycol ether.

The patent discloses preparing trilayer laminates utilizing a glass ply as the outer layer and the inventive two-layer, preformed sheet adhesively attached thereto by means of the thermoplastic lamina. The thermosetting plastic provides anti-lacerative properties and demonstrates self-healing.

The desired, three-ply laminated product is fabricated through the following three steps:

(1) the outer glass layer is heated to a temperature of at least 40°C, preferably 50°—80°C;

(2) a sheet of the composite layer is pressed onto the glass surface while at that temperature with the thermoplastic lamina being in contact with the glass surface, a pressure ranging about 0.5—2 bars above atmospheric pressure being suggested as operable; and

(3) the laminate is introduced into an autoclave and heated to higher temperatures and prssures, e.g. temperatures of about 100°—140°C and pressures of about 3—15 bars above atmospheric pressure.

The patent also observed that tinting of the plastic sheet may be effected prior to or subsequent to its being applied to the glass ply, but no details were provided as to the dye compositions used or the process for carrying out the tinting.

An object of the present invention is to provide a process for making a three-layer, laminated lens structure suitable for eyeglass wear, i.e. prescription and non-prescription lenses, including sunglasses, said lens consisting of an outer ply of glass and an inner layer of an optically transparent, thermosetting polyurethane bonded to the glass through a thin layer of an optically transparent, thermoplastic polyurethane.

According to the invention there is provided a method for making a laminated ophthalmic lens assembly having a negative power or a positive power and consisting of an outer glass lens and a composite, integral, optically transparent, laminated organic polymeric sheet bonded thereto, such that, when subjected to the peeling test of ASTM D903—49, the assembly demonstrates an adhesive force ranging between of from 2—25 N/cm, said glass lens having a center thickness not less than about 0.5 mm with a negative power lens and an overall thickness not less than 1 mm with a positive power lens, and said laminated polymeric sheet having a total thickness ranging from 0.25 to 0.55 mm being composed of a thermoplastic polyurethane ply having a thickness of from 0.04 to 0.06 mm and a thermosetting polyurethane ply having a thickness from 0.2 to 0.5 mm, said thermoplastic polyurethane ply being bonded to said glass lens and being formed from an aliphatic diisocyanate and a diol of an aliphatic diacid polyester or a diol of a polyglycol ether, each of said diols having a molecular weight of 500—4000 and said thermosetting polyurethane ply being the product of:

(a) a polyglycol ether resulting from the combination of epoxy-1,2 propane with 2,2-bis(hydroxymethyl) 1-butanol and containing 10.5—12% by weight free hydroxyls; and

(b) a biuret of 1,6-hexamethylene diisocyanate having 21—22% by weight isocyanate groups, the weight of said biuret being between 0.9—1.1 times the weight of said polyglycol ether;

said method comprising the steps of:

(1) firmly holding said laminated polymeric sheet composed of a thin ply of thermoplastic urethane and a thick ply of thermosetting urethane with said thermoplastic polyurethane ply being exteriorly exposed;

(2) cleaning the surfaces to be bonded together;

(3) positioning said glass lens and said laminated polymeric sheet in such a manner that said thermoplastic polyurethane ply is in contact with the facing side of glass lens;

(4) pressing said laminated polymeric sheet against said facing side of said glass lens at room temperature or at a temperature of from 40° to 80°C and at a pressure of from 3 to 5 bars above atmospheric pressure to produce a wrinkle-free and uniformly progressive spreading of said laminated polymeric sheet on said side of said glass lens and to effect adherence of said laminated sheet to said glass lens to form a laminated lens assembly; and thereafter subjecting said laminated lens assembly to a temperature of from 75° to 150°C and a pressure of from 5 to 25 bars above atmospheric pressure for a time interval of from 0.5 to 4 hours to strengthen the bond between said laminated polymeric sheet and said glass lens and to eliminate gaseous inclusions therein.

This process can be used to form an optical quality lens free from dust and other foreign particles, air or other gaseous inclusions, and optical distortions resulting from film deformation in the lamination process. In addition, the process provides uniform adhesion of the film to glass lenses of different compositions and contours, such adhesion being essential for the successful edging, framing, and, optionally, tinting of the plastic after lamination.

The preferred thermoplastic and thermosetting polyurethanes are those described in British Patent No. 1,576,394, supra. Utilizing the multilayer films disclosed in that patent in overall thicknesses of about 0.4 mm, a laminated product with an annealed glass outer layer will withstand the impact of a 5/8″ (about 16 mm) steel ball dropped from a height of 50″ (about 1.27 m). Whereas the glass will fracture, the fragments resulting therefrom will not penetrate through the organic layers. Where measured in the above-described peel test, the adhesive force demonstrated by the lenses produced by the claimed method averages about 10 N/cm (approximately 5.68 lbs/in), with values varying about 2 to 25 N/cm. Such peel strength levels permit edging of the laminate whereas the adhesive forces displayed in the laminates of Patent No. 3,867,235 are too weak to ensure a sound product after edging.

The preferred thickness of the thermoplastic polyurethane ply is about 0.05 mm, and the thickness of the thermosetting lamina is preferably about 0.35 mm.

In the accompanying drawings:

FIGURE 1 schematically represents an apparatus for cleaning the surface of the polymeric sheet;

FIGURE 2 schematically illustrates an apparatus for cleaning the surface of the lens;

FIGURE 3 is a top plan view of the foraminous top surface of the apparatus depicted in FIGURE 1;

FIGURES 4 and 5 are schematic side views of the apparatus of FIGURE 1 demonstrating means for positioning the polymeric sheet on the surface of the glass lens; and

FIGURE 6 schematically portrays an apparatus for pressing the polymeric sheet against the surface of the glass lens.

In the embodiment shown in the drawings, an optically transparent, unitary, polymeric composite sheet 1 is prepared composed of a thin layer of thermoplastic polyurethane 1A and a thick layer of thermosetting polyurethane 1B.

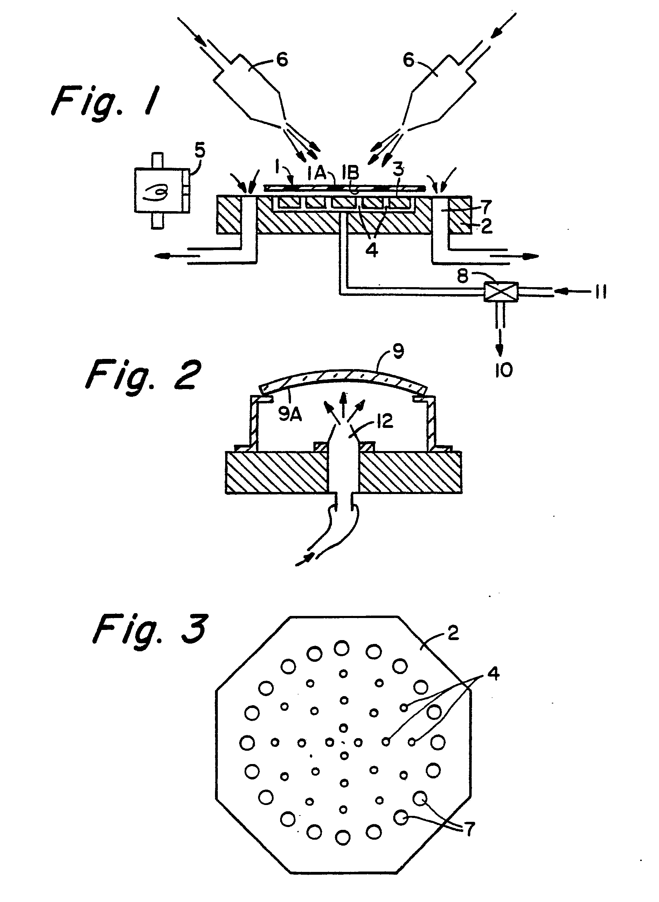

As illustrated in FIGURES 1 and 3, polymeric sheet 1 is positioned with thermosetting layer 1B resting upon the top surface 2 of the apparatus which had previously been treated with anti-adhesive and anti-reflective materials 3. Polymeric sheet 1 is applied with its thermosetting layer 1B against the top surface 2 of the apparatus by a vacuum through small holes 4 connected for this purpose to a vacuum source 10 of about 50 mm mercury (approximately 67 millibars). The size of the holes 4 and extent of the vacuum are regulated such that the force exerted on sheet 1 by the vacuum will not induce any permanent deformation of the sheet 1 in the holes 4. Valve 8 permits a vacuum to be drawn or compressed air to be introduced from pressure source 11 through holes 4.

Particles which may be resting upon the thermoplastic layer 1A of polymeric sheet 1 are illuminated under low incidence light 5. Deionized air is blown through pipes 6 onto thermoplastic layer 1A of sheet 1 to remove such particles which are aspirated through suction holes 7 located around the perimeter of sheet 1. The cleaning operation with deionized air is advantageously completed by means of light antistatic brushing utilizing a brush made of long haired velvet and connected to an aspirator (not shown).

Immediately prior to bringing glass lens 9 and polymeric sheet 1 into contact with each other, a blast of deionized air is directed onto the inner surface 9A of lens 9 through pipe 12 (FIGURE 2) to remove any possible dust.

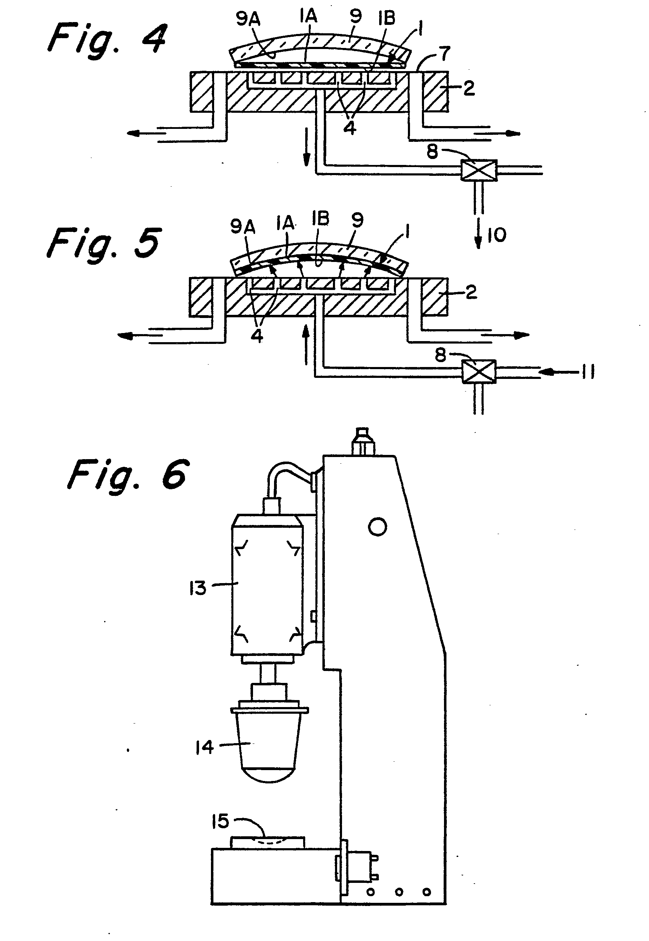

Then, referring to FIGURE 4, glass lens 9 is placed upon polymeric sheet 1, the thermosetting layer 1B thereof resting on the top surface 2 of the cleaning apparatus. In FIGURE 5, a partial vacuum which holds sheet 1 to the top surface 2 is interrupted by acting valve 8 and, instead, compressed air is blown through holes 4. As a consequence, sheet 1 is removed from the top surface 2 and forced against side 9A of lens 9. The position of the holes 4 and the force of the compressed air applied from source 11 are controlled in such a manner that sheet 1 is moved against side 9A of lens 9 without irregular distortion of stresses. Sheet 1 adheres sufficiently well to lens 9 to prevent the entrance of loose particles therebetween.

FIGURE 6 represents an apparatus which has been found to be very effective in pressing sheet 1 into uniform contact with the surface of lens 9 while simultaneously eliminating large gaseous inclusions from the laminated structure. The apparatus basically consists of a pneumatic cylinder 13, a plunger 14, and a lens holder 15 whose function is to hold lens 9 securely. The contour of plunger 14 and the hardness of the material are selected to effect a wringle-free and uniformly progressive movement of polymeric sheet 1 over the surface of side 9A of lens 9. An elastomer material having a Shore hardness of 45 has functioned very well to provide films of uniform thickness over lenses within the range of −18 to +20 diopters, i.e., having surface radii ranging from 175 mm to 20 mm. After this pressing step, the laminated structure may be stored indefinitely under normal conditions and ambient temperature.

Heating the laminate at elevated temperatures and pressures to strengthen the bonding and to remove any gaseous inclusions can be carried out in an air autoclave or other high pressure equipment. With the thermoplastic and thermosetting films used herein, the preferred operating procedure involves exposure times of about 2 to 3 hours, temperatures varying over the interval of about 100—120°C, and pressures ranging between about 12—18 bars abofe atmospheric pressure. Most advantageously, the laminate will be subjected to the elevated temperatures and pressures at relatively the same time, for example using an autoclave with the laminate contained therewithin can be heated to a predetermined temperature and the pressure raised in conjunction therewith. A dwell time of about two hours within the preferred ranges of temperatures and pressures has been deemed especially suitable to ensure strong, substantially bubble-free laminates.

Also, to inhibit thermal deformation, it is strongly recommended that the laminated structure be cooled under pressure at least down to a temperature of about 40°C.

## Claims

1. A method for making a laminated ophthalmic lens assembly having a negative power or a positive power and consisting of an outer glass lens (9) and a composite, integral, optically transparent, laminated organic polymeric sheet (1) bonded thereto, such that, when subjected to the peeling test of ASTM D903—49, the assembly demonstrates an adhesive force ranging between of from 2—25 N/cm, said glass lens (9) having a center thickness not less than about 0.5 mm with a negative power lens and an overall thickness not less than 1 mm with a positive power lens, and said laminated polymeric sheet (1) having a total thickness ranging of from 0.25 to 0.55 mm being composed of a thermoplastic polyurethane ply (1A) having a thickness of from 0.04 to 0.06 mm and a thermosetting polyurethane ply (1B) having a thickness from 0.2 to 0.5 mm, said thermoplastic polyurethane ply (A) being bonded to said glass lens (9) and being formed from an aliphatic diisocyanate and a diol of an aliphatic diacid polyester or a diol of a polyglycol ether, each of said diols having a molecular weight of 500—4000, and said thermosetting polyurethane ply (1B) being the product of:

(a) a polyglycol ether resulting from the combination of epoxy-1,2 propane with 2,2-bis(hydroxymethyl) 1-butanol and containing 10.5—12% by weight free hydroxyls; and

(b) a biuret of 1,6-hexamethylene diisocyanate having 21—22% by weight isocyanate groups, the weight of said biuret being between 0.9—1.1 times the weight of said polyglycol ether;

said method comprising the steps of:

(1) firmly holding said laminated polymeric sheet (1) composed of a thin ply (1A) of thermoplastic urethane and a thick ply (1B) of thermosetting urethane with said thermoplastic polyurethane ply (1A) being exteriorly exposed;

(2) cleaning the surfaces (9A, 1A) to be bonded together;

(3) positioning said glass lens (9) and said laminated polymeric sheet (1) in such a manner that said thermoplastic polyurethane ply (1A) is in contact with the facing side (9A) of glass lens (9);

(4) pressing said laminated polymeric sheet (1) against said facing side (9A) of said glass lens (9) at room temperature or at a temperature of from 40° to 80°C and at a pressure of from 3 to 5 bars above atmospheric pressure to produce a wrinkle-free and uniformly progressive spreading of said laminated polymeric sheet (1) on said side (9A) of said glass lens (9) and to effect adherence of said laminated sheet (1) to said glass lens (9) to form a laminated lens assembly; and thereafter

(5) subjecting said laminated lens assembly (1, 9) to a temperature of from 75° to 150°C and a pressure of from 5 to 25 bars above atmospheric pressure for a time interval of from 0.5 to 4 hours to strengthen the bond between said laminated polymeric sheet (1) and said glass lens (9) and to eliminate gaseous inclusions therein.

2. A method according to claim 1, wherein in step (5) said laminate lens assembly is exposed to a temperature of from 100° to 125°C, and a pressure of from 12 to 18 bars above atmospheric pressure, for a time interval of from 2 to 3 hours.

## Revendications

1. Procédé de fabrication d'un assemblage de lentille ophtalmique stratifiée, possédant un pouvoir négatif ou un pouvoir positif et constitué d'une lentille extérieure (9) en verre et d'une feuille composite stratifiée continue (1) en polymère organique, optiquement transparente, fixée à celle-ci, cet assemblage exhibant dans l'essai d'arrachement selon la norme ASTM D 903—49 une force d'adhérence comprise entre 2 et 25 N/cm, la lentille en verre (9) possédant une épaisseur au centre au moins égale à environ 0,5 mm dans le cas d'une lentille à pouvoir négatif et une épaisseur globale d'au moins 1 mm dans le cas d'une lentille à pouvoir positif et la feuille polymère stratifiée (1) une épaisseur totale comprise entre 0,25 et 0.55 mm et étant formée d'une couche (1A) en polyuréthanne thermoplastique d'une épaisseur de 0,04 à 0,06 mm et d'une couche (1B) en polyuréthanne thermodurcissable d'une épaisseur de 0,2 à 0,5 mm, la couche en polyuréthanne thermoplastique (1A), liée à la lentille en verre (9), étant dérivée d'un diisocyanate aliphatique et d'un diol d'un polyester d'un diacide aliphatique ou d'un diol d'un éther de polyglycol, le diol employé possédant un poids moléculaire de 500 à 4000, et la couche (1B) en polyuréthanne thermodurcissable étant le produit

de (a) un éther de polyglycol dérivé d'une combinaison de l'époxy-1,2 propane et du 2,2-bis-(hydroxyméthyl) butanol-1, comprenant 10,5 à 12% en poids de groupes hydroxyle libres, et

de (b) un biuret du diisocyanate-1,6 d'hexaméthylène comprenant entre 21 et 22% en poids de groupes isocyanate, la proportion pondérale du biuret correspondant à 0,9—1,1 fois celle de l'éther de polyglycol,

procédé caractérisé en ce qu'il comprend les opérations ci-après:

(1) la mise en place de la feuille polymère stratifiée (1), composée d'une mince couche (1A) d'un uréthanne thermoplastique et d'une couche plus épaisse (1B) d'un uréthanne thermodurcissable, la couche de polyuréthanne thermoplastique (1A) étant tournée vers l'extérieur;

(2) le nettoyage des surfaces 9A et 1A à fixer l'une sur l'autre;

(3) l'application du côté 9A de la lentille en verre (9) sur la couche 1A en polyuréthanne thermoplastique de la feuille polymère stratifiée (1);

(4) la pression de la feuille polymère stratifiée (1) sur le côté de la lentille en verre (9), à la température ordinaire ou à une température comprise entre 40 et 80°C, la pression étant de l'ordre de 3 à 5 bars supérieure à la pression atmosphérique, afin d'obtenir une application continue et exempte de plis de la feuille polymère stratifiée (1) sur la face 9A de la lentille en verre (9) et partant l'adhérence de ladite feuille stratifiée (1) sur la lentille en verre (9), l'assemblage à lentille stratifiée (1, 9) obtenu étant ensuite soumis

(5) pendant 0,5 à 4 heures, entre 75 et 150°C, à une pression de 5 à 25 bars supérieure à la pression normale en vue d'en éliminer les inclusions gazeuses et de renforcer la liaison entre la feuille polymère stratifiée (1) et la lentille en verre (9).

2. Procécé suivant la revendication 1, caractérisé en ce que, dans le stade 5, l'assemblage à lentille stratifiée est soumis pendant deux à trois heures et à une température comprise entre 100 et 125°C à une pression de 12 à 18 bars supérieure à la pression atmosphérique.

**Patentansprüche**

1. Verfahren zur Herstellung einer laminierten ophthalmischen Linsenanordnung, die eine negative oder eine positive Brechkraft besitzt und die aus einer Außenglaslinse (9) und einer an dieser derartig geklebten zusammengesetzten, einstückigen, optisch transparenten, laminierten dünnen organischen Polymerlage (1) besteht, daß die Anordnung, wenn sie dem Abschältest gemäß ASTM D 903—49 unterzogen wird, eine Haftkraft im Bereich zwischen 2—25 N/cm zeigt, wobei die Glaslinse (9) eine Mittendicke von nicht weniger als etwa 0,5 mm bei einer Zerstreuungslinse und eine Gesamtdicke von nicht weniger als 1 mm bei einer Sammellinse besitzt, und wobei die laminierte dünne Polymerlage (1), die eine Gesamtdicke im Bereich von 0,25 bis 0,55 mm besitzt, aus einer thermoplastischen Polyurethanlage (1A) mit einer Dicke von 0,04 bis 0,6 mm und aus einer aushärtenden Polyurethanlage (1B) mit einer Dicke von 0,2 bis 0,5 mm zusammengesetzt ist, wobei die thermoplastische Polyurethanlage (1A) an der Glaslinse (9) festgeklebt ist und aus einem aliphatischen Diisocyanat und aus einem Diol eines aliphatischen Disäurepolyesthers oder aus einem Diol eines Polyglycoläthers gebildet ist, wobei jedes Diol ein Molekulargewicht von 500—4000 besitzt und wobei die aushärtbare Polyurethanschicht (1B) das Produkt darstellt aus:

(a) einem Polyglycoläther, der aus der Verbindung von Epoxy-1,2 Propan mit 2,2-bis (Hydroxymethyl) 1-Butanol resultiert und 10,5—12 Gewichtsprozent freie Hydroxyle enthält; und aus

(b) einem Biuret aus 1,6-Hexamethylen Diisocyanat mit 21—22 Gewichtsprozent Isocyanatgruppen, wobei das Gewicht des Biurets zwischen 0,9—1,1 mal dem Gewicht des Polyglycol Äthers beträgt; gekennzeichnet durch folgende Verfahrensschritte:

(1) festes Halten der laminierten dünnen Polymerlage, die aus einer dünnen Schicht aus thermoplastischen Urethan und einer dicken Schicht aus aushärtbarem Urethan besteht, wobei die thermoplastische Polyurethanschicht nach außen freiliegt;

(2) Reinigen der zusammenzuklebenden Oberflächen;

(3) Positionieren der Glaslinse und der laminierten dünnen Polymerschicht in der Weise, daß die thermoplastische Polyurethanschicht in Kontakt mit der vorderen Seite der Glaslinse ist;

(4) Pressen der laminierten dünnen Polymerlage gegen die vordere Seite der Glaslinse bei Raumtemperatur oder bei einer Temperatur von 40 bis 80°C und bei einem Druck zwischen 3 und 5 bar oberhalb des athmosphärischen Drucks, um ein verzerrungsfreies und gleichförmiges fortschreitendes Verbreiten der laminierten dünnen Polymerlage auf der besagten Seite der Glaslinse zu erzeugen und um ein Anhaften der laminierten dünnen Lage an der Glaslinse zur Bildung einer laminierten Linsenanordnung herbeizuführen; und danach

(5) Aussetzen der laminierten Linsenanordnung (1, 9) einer Temperatur von 75—150°C und einem Druck von 5—25 bar oberhalb des atmosphärischen Drucks während eines Zeitintervalls von 0,5 bis 4 Stunden, um die Haftung zwischen der laminierten dünnen Polymerlage (1) und der Glaslinse (9) zu stärken und um gasförmige Einschlüsse darin zu eliminieren.

2. Verfahren nach Anspruch 1, dadurch gekennzeichnet, daß beim Verfahrensschritt 5 die laminierte Linsenanordnung einer Temperatur von 100 bis 125°C und einem Druck von 12—18 bar oberhalb des atmosphärischen Drucks während eines Zeitintervalls zwischen 2 und 3 Stunden ausgesetzt wird.

*Fig. 1*

*Fig. 2*

*Fig. 3*

1

**Fig. 4**

**Fig. 5**

**Fig. 6**